(19) Europäisches Patentamt
European Patent Office
Office européen des brevets

(11) **EP 1 754 966 A1**

(12) **EUROPEAN PATENT APPLICATION**
published in accordance with Art. 158(3) EPC

(43) Date of publication:
**21.02.2007 Bulletin 2007/08**

(51) Int Cl.:
*G01N 19/02* $^{(2006.01)}$  *G01L 5/00* $^{(2006.01)}$

(21) Application number: **05741447.6**

(22) Date of filing: **17.05.2005**

(86) International application number:
**PCT/JP2005/008929**

(87) International publication number:
**WO 2005/111576 (24.11.2005 Gazette 2005/47)**

(84) Designated Contracting States:
**DE**

(30) Priority: **18.05.2004 JP 2004147977**

(71) Applicant: **GUNMA UNIVERSITY**
**Gunma, 3710044 (JP)**

(72) Inventors:
• **FUJII, Yusaku**
**3760034 (JP)**

• **YAMAGUCHI, Takao**
**3700321 (JP)**

(74) Representative: **Sajda, Wolf E.**
**MEISSNER, BOLTE & PARTNER**
**Postfach 86 06 24**
**81633 München (DE)**

(54) **DEVICE FOR TESTING FRICTION AND METHOD FOR TESTING FRICTION**

(57) In a friction testing apparatus and method for accurately detecting a physical quantity relating to a friction such as a friction force or the like indicating a friction characteristic between objects to be measured in a dynamic state, a first object (21) to be measured is mounted to a movable portion (10C) provided so as to be movable along a guide portion (10B), a second object (22) to be measured is pressed against the first object (21) to be measured mounted to the movable portion (10C), an object, in which the first object to be measured and the movable portion are integrated with each other, is moved in a state in which the second object to be measured is pressed against the first object to be measured, and an inertia force of the object at a time of moving the object is detected as a friction force acting between the first object to be measured and the second object to be measured.

FIG. 1

EP 1 754 966 A1

**Description**

Technical Field

The present invention relates to a friction testing apparatus and a friction testing method, and more particularly to a friction testing apparatus and a friction testing method for detecting a friction-related physical quantity such as a friction force or the like by using an inertia force or an inertia moment.

Background Art

Conventionally known is an evaluating apparatus for evaluating an impact response of a force sensor by making a movable portion, which is supported on a guide portion of a direct acting type bearing, collide with a force sensor, and by estimating a net force applied to the force sensor on the basis of a speed change during the collision (Patent Document 1).

Further, there has been known a method of detecting a friction state by pressing a sample held by a sample holder to an outer surface of an endless belt entrained around a pair of rotary drums so as to rotate the endless belt, and by using a force sensor such as a load cell or the like so as to detect a force acting on the sample holder (Patent Document 2).

Still further, there has been known a friction force measuring apparatus in which: a first sample is fixed to a slider driven by a linear motor; a second sample is mounted on the first sample; a linear motor is driven in a state in which a weight is mounted on the second sample; and a thrust is determined as a static friction force based on a motor current value of the linear motor and a thrust constant of the linear motor (Patent Document 3). In this friction force measuring apparatus, the linear motor is driven at a constant speed, the thrust corresponding to the motor current value is determined as a dynamic friction force based on the current-thrust characteristic of the linear motor. Meanwhile, the quantity of movement of the slider is detected by a linear encoder.

> Patent Document 1: Japanese Patent Application Laid-Open
> (JP-A) No. 2000-283 873
> Patent Document 2: Japanese Patent Application Laid-Open
> (JP-A) No. 2001-174 400
> Patent Document 3: Japanese Patent Application Laid-Open
> (JP-A) No. 10-062 273

Disclosure of the Invention

Problem to be Solved by the Invention

The technique of the Patent Document 1 relates to an apparatus for evaluating the impact response of a force sensor. The technique of the Patent Document 2, although established as a calibration method (a static calibration method) of a detection output of the force sensor with respect to a static force, has a problem such that when a dynamic force is applied to the force sensor, since there occurs a phenomenon such as response delay of the detection output with respect to the change of the force or the like, the dynamic force cannot be accurately measured even if the detection output of the force sensor is calibrated by the static calibration method. Thus, when the friction force applied between objects (samples) to be measured changes, a problem arises such that since a measurement accuracy cannot be secured even if the friction force is measured by the force sensor, it is difficult to accurately detect a physical quantity that indicates a friction characteristic between the objects to be measured.

Further, the technique of the Patent Document 3 has a problem such that in order to measure a dynamic friction force, it is necessary to previously determine the current-thrust characteristic of the linear motor, and it is likely that displacement and deflection is caused due to the use of a linear motor or linear slider having an elongated shape, so that difficulty is experienced in accurately detecting the friction force.

The invention has been made for the purpose of solving the problems mentioned above, and an object of the invention is to provide a friction testing apparatus and a friction testing method which can accurately detect, even in a dynamic state, a friction-related physical quantity such as friction force or the like, which indicates a friction characteristic between objects to be measured, without using a force sensor.

Means for Solving the Problem

In order to achieve the object mentioned above, a friction testing apparatus according to the present invention is structured to include: a movable portion, mounted to a guide portion so as to be movable along the guide portion and to which a first object to be measured is mountable; a mounting member, for mounting a second object to be measured pressed by the first object to be measured attached to the movable portion; a light wave interferometer, having a reflection member fixed to the movable portion and a light source inputting light to the reflection member, and detecting a change in state of light reflected from the reflection member when a body of the reflection member, the movable portion and the first object to be measured, integrated with each other, relatively moves with respect to the second object to be measured, in a state in which the first object to be measured attached to the movable portion and the second object to be measured attached to the mounting member are pressed against each other; and a physical quantity detecting device for detecting a physical quantity related to friction acting between the first object to be measured and the second object to be measured, on the basis of the change in state of the reflected light detected by the light wave interferometer.

According to the invention, an object of the reflection member, the movable portion and the first object to be measured, integrated with each other, is relatively moved with respect to the second object to be measured, in a state in which the first object to be measured mounted to the movable portion and the second object to be measured attached to the mounting member are pressed against each other, and a change in state of light reflected from the reflection member is detected by the light wave interferometer. Further, a physical quantity related to friction acting between the first object to be measured and the second object to be measured is detected on the basis of the change in state of the reflected light which is detected by the light wave interferometer.

In this configuration, by causing the object of the reflection member, the movable portion and the first object to be measured, integrated with each other, to be moved relative to the second object to be measured, the force applied to the second object to be measured from the first object to be measured and the force applied to the first object to be measured from the second object to be measured are forces which are opposite in direction and equal in magnitude to each other based on the law of action and reaction. Further, on condition that it is possible to disregard external forces such as an internal friction force, air resistance and the like acting between the guide portion and the movable portion, the inertia force of the above-mentioned object becomes equal in magnitude to the friction force acting between two objects to be measured. Thus, by detecting the inertia force, it is possible to detect the friction force with high accuracy as a physical quantity related to the friction acting between the first object to be measured and the second object to be measured.

Since the force due to inertia of the above-mentioned object is equal to a product of the mass and acceleration of the object, it is possible to accurately detect the acceleration of the object by detecting a displacement speed of the object by the light wave interferometer and differentiating the detected displacement speed, and thus it is possible to accurately detect the inertia force of the object based on the acceleration and the mass of the object.

According to the invention, it is possible to detect, as a friction-related physical quantity, at least one of the displacement with reference to a reference position, the speed and the acceleration of the object in addition to the friction force acting between the first object to be measured and the second object to be measured. A structure in which the displacement of the object is detected by integrating the displacement speed of the object detected by the light wave interferometer eliminates the need to separately provide means for measuring the displacement of the object and is advantageous cost-wise as well.

According to the invention, since the force sensor is not used, it is possible to dramatically improve the measuring precision of physical quantity related to changing friction as compared with the conventional method using a force sensor.

It is desirable to support the movable portion of the invention by a direct acting bearing such as a static pressure air direct acting bearing, a magnetic direct acting bearing or the like, in a manner such that a motion thereof is limited to single degree of freedom. The static pressure air direct acting bearing has two significant features, that is, high accuracy of motion (a high stability relating to the other five axes than a motion axis) and low friction. By using the static pressure air direct acting bearing having these two features, it is possible to make the friction force applied to the object as small as possible, thereby reducing to an extremely small value a deviation between the inertia force of the object and the friction force applied to the portion between the objects to be measured. It is also possible to increase accuracy of relative motion between two objects to be measured (geometric accuracy of relative motion between two objects to be measured is also very important in order to perform friction measurement with high accuracy), thereby improve the measuring accuracy.

According to the invention, the structure may be made such that a pressing force detecting device for detecting a pressing force applied to the second object to be measured is provided, so that the physical quantity detecting device detects as a friction-related physical quantity a friction coefficient expressed by a ratio of the friction force acting between the first object to be measured and the second object to be measured with respect to the pressing force detected by the pressing force detecting device.

In this case, it is possible to measure a component perpendicular to a main component of the friction force with high accuracy without using a force sensor, by providing a direct acting bearing mechanism in which a movable shaft is constituted by a guide portion or the like and which is installed perpendicularly to a direction of the main component of the friction force to be measured, attaching the second object to be measured to the movable shaft, and detecting by the light wave interferometer the force component in the direction perpendicular to the direction of the main component of the friction force to be measured.

According to the invention, the friction testing apparatus can be structured as below by providing a pair of measuring units each including the movable portion and the light wave interferometer. That is, the friction testing apparatus can be structured to include: a first movable portion, mounted to a first guide portion so as to be movable along the first guide portion and to which a first object to be measured is mountable; a second movable portion, mounted to a second guide portion arranged in parallel to the first guide portion so as to be movable along the second guide portion and to which a second object to be measured pressed by the first object to be measured is mountable; a first light wave interferometer, having a first reflection member fixed to the first movable portion and a first light source inputting light to the first reflection member, and detecting a change in state of light reflected from the first reflection member when a body of the first reflection member, the first movable portion and the first object to be measured, integrated with each other, relatively moves with respect to the second object to be measured, in a state in which the first object to be measured mounted to the first movable portion and the second object to be measured mounted to the second mounting member are pressed against each other; a second light wave interferometer having a second reflection member fixed to the second movable portion and a second light source inputting the light to the second reflection member, and detecting a change in state of light reflected from the second reflection member when a body of the second reflection member, the second movable portion and the second object to be measured, integrated with each other, relatively moves with respect to the first object to be measured, in a state in which the first object to be measured mounted to the first movable portion and the second object to be measured mounted to the second mounting member are pressed against each other; and a physical quantity detecting device for detecting a physical quantity related to friction acting between the first object to be measured and the second object to be measured, on the basis of the change in state of the reflected light detected by at least one of the first light wave interferometer and/or the second light wave interferometer.

In this case, the structure may be made such that the second movable portion is provided with a third movable portion which is movable with respect to the second movable portion, and the second object to be measured is attached to the second movable portion via the third movable portion.

According to the invention, there is provided a friction testing apparatus structured to include: a movable portion provided with an insertion portion inserted into a fluid and attached to a guide portion so as to be movable along the guide portion; a light wave interferometer including a reflection member fixed to the movable portion and a light source inputting the light to the reflection member, and detecting a change in state of light reflected from the reflection member when an object of the reflection member, the movable portion and the insertion portion, integrated with each other, relatively moves with respect to the fluid, in a state in which the insertion portion is inserted into the fluid; and a detecting device for detecting a physical quantity related to friction of the fluid acting on the insertion portion, on the basis of the change in state of the reflected light detected by the light wave interferometer. Accordingly, it is possible to detect a physical quantity related to friction of the fluid acting on the insertion portion.

Further, there is provided a friction testing apparatus structured to include: a rotary body rotatably provided in a guide portion; a flywheel attached to the rotary body so as to be rotatable together with the rotary body; a mounting member to which is mounted an object to be measured which is pressed by an outer peripheral surface of the flywheel; an angular acceleration detecting device for detecting an angular acceleration of an object constituted by the rotary body and the flywheel when rotating the flywheel together with the rotary body, in a state of pressing the object to be measured to the outer peripheral surface of the flywheel; and a physical quantity detecting device for detecting a physical quantity related to friction acting between the object to be measured and the flywheel, on the basis of the angular acceleration detected by the detecting device.

Accordingly, it is possible to detect a physical quantity related to friction acting between the object to be measured and the flywheel. In the case of detecting a friction force as a physical quantity related to friction acting between the object to be measured and the flywheel, the friction force can be measured using a static pressure air rotation bearing in which an inertia moment is previously measured. In this case, one static pressure air rotation bearing is required to measure one-axis moment (torque). The moment measurement principle is described in a reference document (Y. Fujii, K. Ogushi, T. Tojo, "A proposal for a dynamic-response-evaluation method for torque transducers", Meas. Sci. Technol, Vol. 10, No. 12, pp. N142-N144, 1999).

Further, according to the invention, there is provided a friction testing method including: mounting a first object to be measured to a weight body provided so as to be movable along a guide portion; pressing a second object to be measured against the first object to be measured mounted to the weight body; moving a body of the first object to be measured and the weight body, integrated with each other, in a state in which the second object to be measured is pressed against the first object to be measured; and detecting a force due to inertia of the object when moving the object, as a friction force acting between the first object to be measured and the second object to be measured..

Further, there is also provided a friction testing method including: rotating a flywheel rotatably provided on a guide portion and pressing an object to be measured against an outer peripheral surface of the flywheel; and detecting a friction force acting between the flywheel and the object to be measured, on the basis of an inertia moment of an object, which is constituted by the flywheel and a rotary body integrally rotating with the flywheel, and an angular acceleration of the flywheel.

Effect of the Invention

As described above, with the friction testing apparatus according to the invention, since friction-related physical quantity is detected without using a force sensor, it is possible to obtain an effect that it is possible to accurately detect, even in a dynamic state, the friction-related physical quantity such as friction force or the like which represents the friction characteristic between the objects to be measured.

Further, with the friction testing method according to the invention, since the friction force is detected on the basis of the inertia force of the object or the inertia moment of the object and the angular acceleration of the flywheel, it is possible to obtain an effect that it is possible to accurately detect the friction force even in a dynamic state.

Brief Description of the Drawings

Fig. 1    is a block diagram showing a friction testing apparatus according to a first embodiment of the present invention;

Fig. 2    is an end elevational view along a line II-II in Fig. 1;

Fig. 3    is a flowchart showing a processing routine detecting a friction force or the like according to the first embodiment;

Fig. 4A    is a graph showing a measured data of a beat frequency;

Fig. 4B    is a graph showing a displacement speed of a weight body calculated on the basis of the measured data of the beat frequency;

Fig. 4C    is a graph showing a displacement of the weight body calculated on the basis of a displacement speed;

Fig. 4D    is a graph showing an acceleration of the weight body calculated on the basis of the displacement speed;

Fig. 4E    is a graph showing an inertia force of the weight body calculated on the basis of an acceleration;

Fig. 5A    is a graph showing by setting a displacement of a friction force FF measured as an inertia force, and a normal force FN measured by a force sensor as a horizontal axis;

Fig. 5B    is a graph showing by setting a displacement of a change of a friction coefficient as a horizontal axis;

Fig. 6    is a graph showing a friction force measured as an inertia force in two times of measuring experiments;

Fig. 7    is a block diagram showing a friction testing apparatus according to a second embodiment of the invention;

Fig. 8    is a block diagram showing a friction testing apparatus according to a third embodiment of the invention;

Fig. 9    is a block diagram showing a friction testing apparatus according to a fourth embodiment of the invention; and

Fig. 10    is a block diagram showing a friction testing apparatus according to a fifth embodiment of the invention.

Best Mode for Carrying Out the Invention

A description will be in detail given below of embodiments according to the present invention with reference to the accompanying drawings.

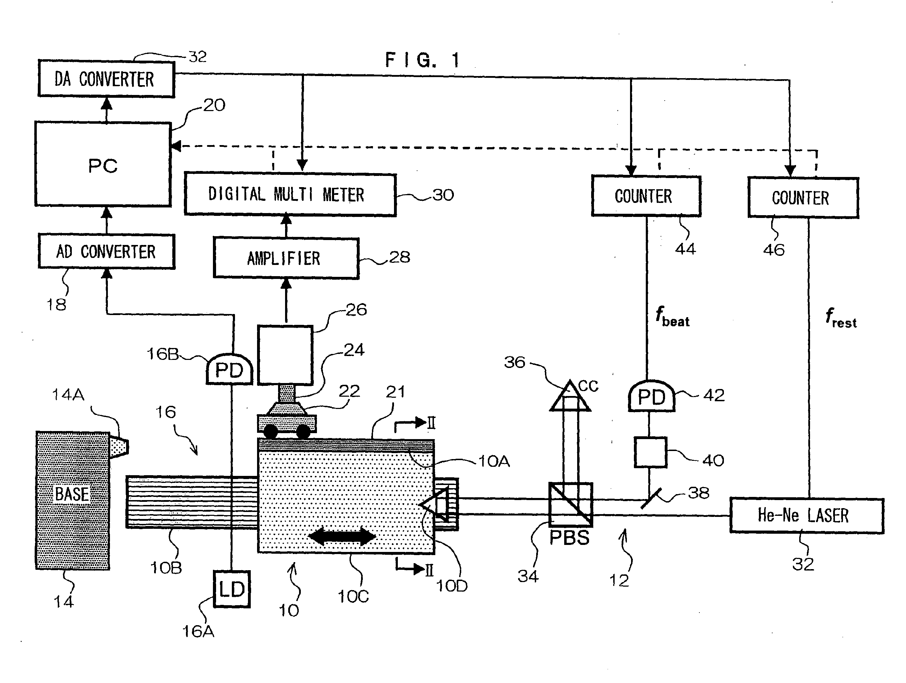

As shown in Fig. 1, in a first embodiment according to the invention, there are provided a direct acting bearing 10 for attaching a first object 21 to be measured such as a metal plate or the like, and a measuring unit including a light wave interferometer 12. The direct acting bearing 10 is structured by a direct acting static pressure air bearing having a low friction resistance, and the direct acting static pressure air bearing may use, for example, an air slide (registered trademark) manufactured by NTN Co., Ltd.

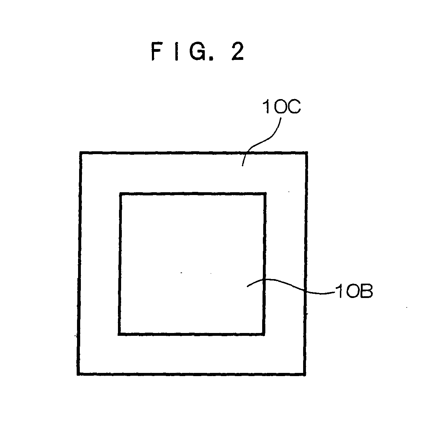

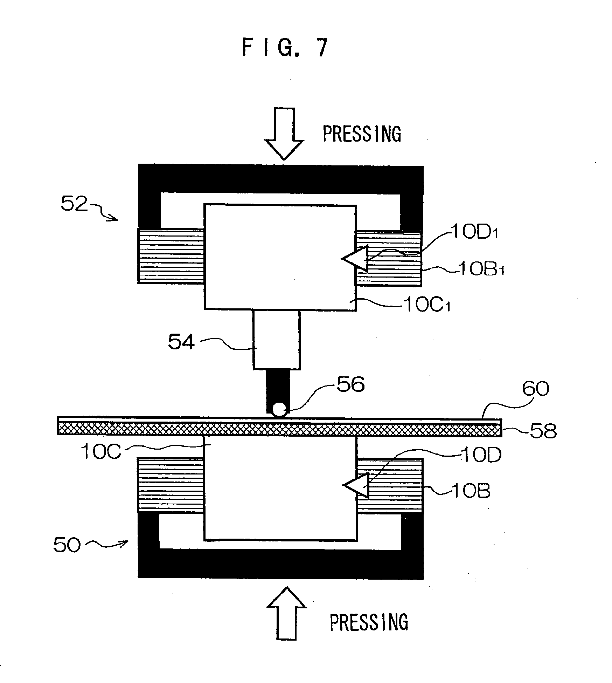

The direct acting bearing 10 is provided with a linear guide portion 10B fixed to a base (refer to Fig. 7) so as to be directed in a horizontal direction, and a block-shaped movable portion 10C attached to the guide portion 10B so as to be movable along the guide portion 10B and serving as a part of a weight body. A through hole is formed in the movable portion 10C, and the guide portion 10B is provided so as to pass through the through hole, as shown in Fig. 2. A compressed air layer (about 5 to 10 $\mu$m) is formed between an inner peripheral surface of the through hole and an outer peripheral surface of the guide portion 10B over the entire periphery of the outer peripheral surface of the guide portion 10B. Accordingly, the movable portion 10C can execute a linear movement in a longitudinal direction of the guide portion 10B on the basis of an extremely low friction resistance. In this configuration, although not shown, compressed air can be introduced from one end of the guide portion 10B, is guided to an inlet formed in a center portion of the movable portion 10C from an outlet formed in a center portion of the guide portion 10B via a groove formed in an inner periphery of the movable portion 10C, and is supplied to the gap via an internal piping of the movable portion 10C.

If the compressed air is directly introduced to the movable portion 10C via an air supply tube, a structure of an air supply passage becomes more simple, however, in the present embodiment, in order to prevent an external force from the air supply tube from being applied to the movable portion 10C, the compressed air is introduced from the guide portion 10B.

Further, an upper surface 10A of the movable portion 10C is structured to be capable of attaching the first object 21 to be measured such as the metal plate or the like, and a corner cube prism 10D constituting a light wave interferometer is fixed to a rear side of a side surface of the movable portion 10C so the light input and output side faces to the rear side.

A base 14 is standingly provided in a manner that faces an end portion of the guide portion 10B, and a buffer material 14A, which is constituted by a rubber block or the like and to which the movable portion 10C is abutted, is fixed to an upper side of a side portion of the guide portion 10B of the base 14.

A reference position sensor 16 is disposed at a reference position set at a position close to the movable portion. 10C between the base 14 and the movable portion 10C in a manner that forms a light path along a vertical direction at the reference position. The reference position sensor 16 is constituted by a laser diode 16A and a photo diode 16B. The photo diode 16B of the reference position sensor 16 is connected to a personal computer 20 via an AD converter 18 converting an analogue signal to a digital signal. The personal computer 20 is provided with a ROM storing a program of a measuring routine mentioned below, a storage medium storing a measured time-series data and constituted by a hard disc or the like, and a display apparatus displaying the stored time-series data and constituted by an LCD, a CRT or the like.

At an upper side of the movable portion 10C is provided a mounting member 24 for attaching a second object 22 to be measured, for example, a miniature car or the like, which is pressed against the first object 21 to be measured attached to the movable portion 10C. The mounting member 24 is attached to a base of a friction testing apparatus via a force sensor 26 detecting a pressing force (a normal force Fn) applied to the second object 22 to be measured in the vertical direction in such a manner as to be movable in the up-down direction.

The force sensor 26 is connected to the personal computer 20 and a DA converter 32 connected to the personal computer 20 via an amplifier 28 amplifying a force sensor output and a digital multi meter 30 detecting a current value output from the amplifier. In place of the digital multi meter, a voltmeter (for example, 3458 A manufactured by HP) may be used.

The light wave interferometer 12 is provided with a light source 32 constituted by a Zeeman type helium neon laser or the like, and a light emitted from the light source 32 is split into a measurement beam and a reference beam by a polarized light beam splitter 34. The measurement beam is input to the corner cube prism 10D fixed to the movable portion 10C, is inverted by the corner cube prism 10C so as the light path is changed 180 degrees, and is again input to the polarized light beam splitter 34.

Here, a direction of the light path between the polarized light beam splitter 34 and the corner cube prism 10D is set in such a manner as to be in parallel to a length-wise direction of the guide 10B, that is, a moving direction of the movable portion 10C, the measurement beam generates a Doppler shift (a frequency change or a phase change on the basis of a Doppler effect) in correspondence to a displacing speed along the guide of the movable portion 10C, at a time of being inverted by the corner cube prism 10D, and a state of the reflected light is changed.

On the other hand, the reference beam is reflected in the direction of a second corner tube prism 36 from the polarized light beam splitter 34, is reflected by the second corner cube prism 36 so as to be again input to the polarized light beam splitter 34, and is interfered with the reflected light (the signal light) from the first corner cube prism 10D by the polarized light beam splitter 34, and an interfered light beam is generated with a beat having a frequency of the difference between frequencies of the signal light and the reference beam. In other words, a change in state (a Doppler shift of the frequency of the signal light, or a change of the phase of the signal light) generated in the signal light is detected by the light wave interferometer on the basis of the interference.

The interfered light beam is input to a light detector 42 constituted by a photo diode from the polarized light beam splitter 34 via a reflection mirror 38 and a polarizing plate (for example, a Glan-Thompson prism) 40, and is converted to an electric signal in correspondence to a beat frequency fbeat of the interfered light beam by the light deflector 42 so as to be input to a first frequency counter 44. Further, a digital data indicating a value of the beat frequency fbeat is generated by the first frequency counter 44, and the digital data is input to the personal computer 20.

Further, an electric signal having a reference frequency frest corresponding to the resting state of the movable portion 10C is generated from a light detector incorporated in the light source 32, and the electric signal is input to the second frequency counter 46. Further, a digital data representing a value of the reference frequency frest is generated from the second frequency counter 46, and the digital data is input to the computer 20.

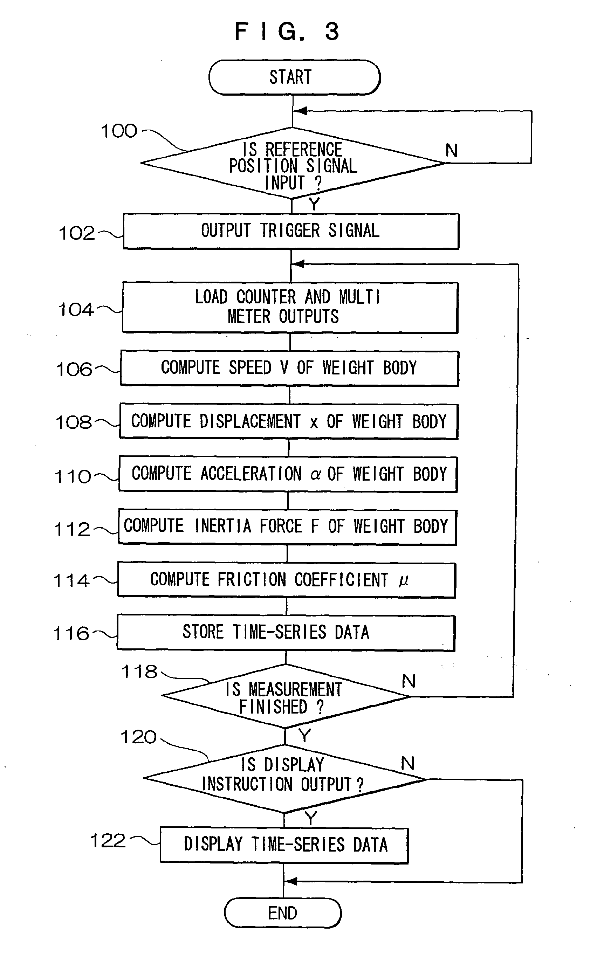

Next, a description will be given of a measuring routine according to the present embodiment with reference to Fig. 3. First, the first object to be measured (for example, the metal plate) 21 is attached to the upper surface of the movable portion 10C, and the second object to be measured (for example, the miniature car) 22 is attached to the mounting member 24.

Accordingly, the first object to be measured is pressed by the second object 22 to be measured on the basis of its own weight of the second object 22 to be measured or the like. In this configuration, the structure may be made such that the first object to be measured is pressed by moving the mounting member 24 to a lower side in such a manner that a predetermined pressing force can be obtained and applying a load in a vertically downward direction to the second object to be measured.

Further, the personal computer is started up, the measuring process routine in Fig. 3 is started, and the laser light is oscillated from the laser diode 16A and the light source 32 in such a manner that the laser light is input to the photo diode 16B and the detecting portion 42. The movable portion 10C is moved on the basis of an inertia by pushing the movable portion 10C by a hand at the first stage in the length direction of the base 14, in a state in which the first object to be measured and the second object to be measured are pressed against each other as mentioned above.

Accordingly, an object (hereinafter, refer to as a weight body), in which the first corner cube prism, the movable portion and the first object to be measured are integrated with each other, moves on the basis of the inertia in the length direction of the guide portion along the guide portion. In this configuration, an actuator may be provided so as to apply an initial velocity (or an initial momentum, or an initial kinetic energy) to the weight body by the actuator.

In a step 100, if the step judges whether or not the reference position signal is input from the reference position sensor 16, and if it is determined that the reference position signal is input, the step inputs a trigger signal to the digital multi meter 30, the first frequency counter 44 and the second frequency counter 46, and starts them, in a step 102. Accordingly, the normal force by the digital multi meter, and the frequency by the counter are synchronously detected.

In the next step 104, signals output from the digital multi meter 30, the first frequency counter 44 and the second frequency counter 46 are read in at a predetermined sample time interval. In a step 106, a speed v of the weight body (the object in which the first corner cube prism 10D, the movable portion 10C and the first object to be measured are integrated with each other) is computed according to the following expression (1), and the displacement speed of the weight body is deected. Since the weight body is moved along the guide portion, the degrees of freedom of motion is limited to a horizontal single axis direction.

$$v = \lambda air \ (fbeat - frest)/2 \ (1),$$

where $\lambda$air denotes a refraction index of air.

In the next step 108, a displacement x of the weight body in the length direction of the guide portion (i.e., a position on the basis of the reference position) is detected by integrating the displacement speed v over sample time intervals. Further, in a step 110, an acceleration $\alpha$ of the weight body in the length direction of the guide portion is detected by differentiating the displacement speed v at the sample time intervals.

Here, in a case where the weight body is supported by the guide portion or the like of the direct acting static pressure air bearing and the friction force acting between the weight body and the guide portion can be neglected, the inertia force F of the weight body becomes equal to the friction force acting between two objects to be measured. Meanwhile, the inertia force F of the weight body can be expressed by an expression $F = M \cdot \alpha$, where M is a mass of the weight body, and $\alpha$ is an acceleration of the weight body.

Accordingly, in a step 112, the inertia force F of the weight body in the length direction of the guide portion is detected as the friction force by multiplying the detected acceleration $\alpha$ by the previously stored mass M of the weight.

In the next step 114, a friction coefficient $\mu$ is detected by dividing the inertial force F by the normal force Fn detected by the force sensor 26. Further, in a step 116, respective data such as the displacement speed v, the acceleration $\alpha$, the position x, the inertia force F and the friction coefficient $\mu$, which are physical quantities related to the friction acting between the objects to be measured detected as a result of the foregoing computation are stored and held in a storage medium such as a hard disc or the like on a time-series basis.

In the next step 118, it is determined whether or not a predetermined time has elapsed after the weight body has passed the reference position, and thus it is determined whether or not the measurement end timing has been reached. If the measurement end timing has not yet been reached, detection of the respective such as the displacement speed v, the acceleration $\alpha$, the position x, the inertia force F and the friction coefficient $\mu$ is continued at the above-described sample time intervals.

When it is judged that the measurement is finished at a time when the predetermined time has elapsed after the weight body has passed through the reference position, it is determined in a step 120 whether or not an instruction for displaying the time-series data is provided by an operation of a keyboard or the like. When the display instruction is provided, in a step 122, the time-series data is read from the storage medium so that a display is generated on the display apparatus. Further, the time-series data may be appropriately output from a printer or the like.

Although in the foregoing, description has been made of an example in which the displacement speed v and the like are detected at a sample time interval, since highspeed measurement (measurement having zero dead time (quiescent time) in the frequency measurements) is desired, the structure may be made so as to transmit in advance data indicating a sampling number (number of measured and stored data) to a measuring apparatus such as a digital multi meter, a counter or the like from the personal computer via a communication line (GPIB or the like), measure the predetermined sampling number of data by the measuring apparatus, thereafter transfer the measured data to the personal computer from the measuring apparatus, and detect the friction-related physical quantity such as the displacement speed v or the like on the basis of the transferred measured data. The sampling number may be set, for example, to be 1000 or 1400.

Further, although in the foregoing, a description has been given of the example in which the frequency counter is used, use may be made of a structure in which the electric signal output from the light detector 42 is recorded by a high-performance waveform recording apparatus without using the frequency counter, and subsequently, the frequency change with respect to time, i.e., the time change of the beat frequency fbeat, is determined from the recorded waveform. In the case where the structure is made such as to determine the time change of the beat frequency fbeat in the manner mentioned above, it is possible to measure the frequency at higher accuracy.

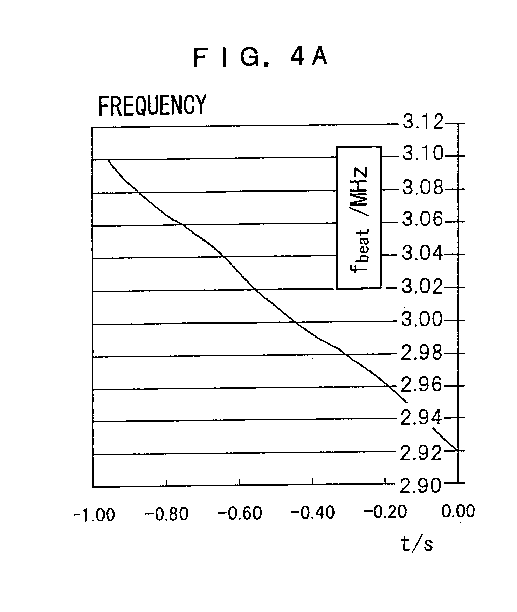

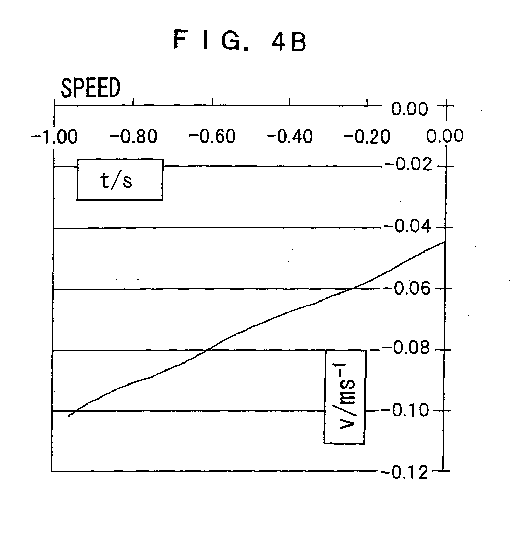

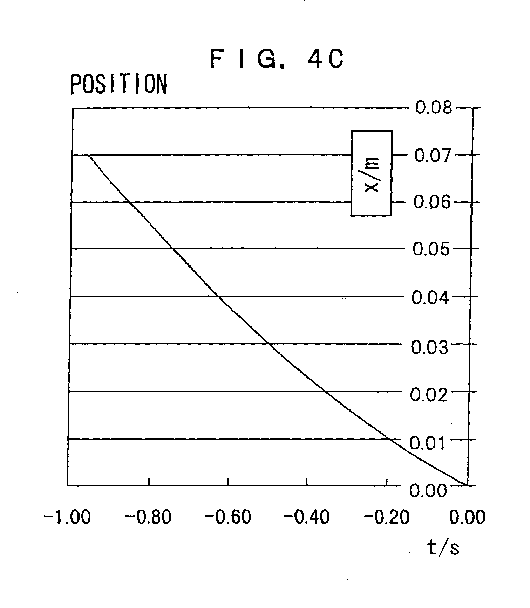

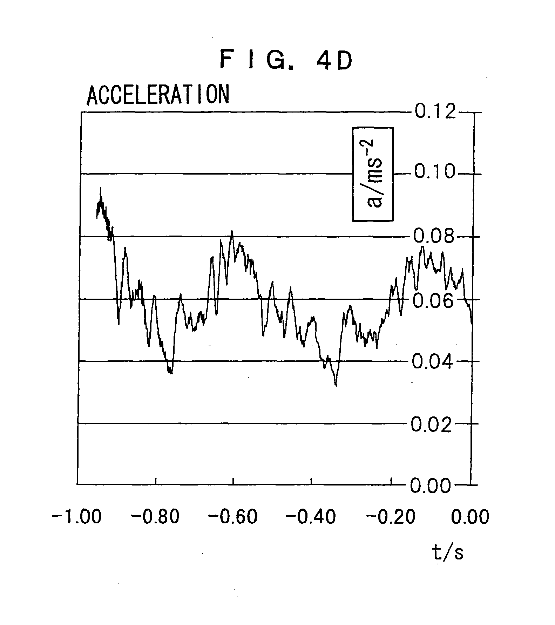

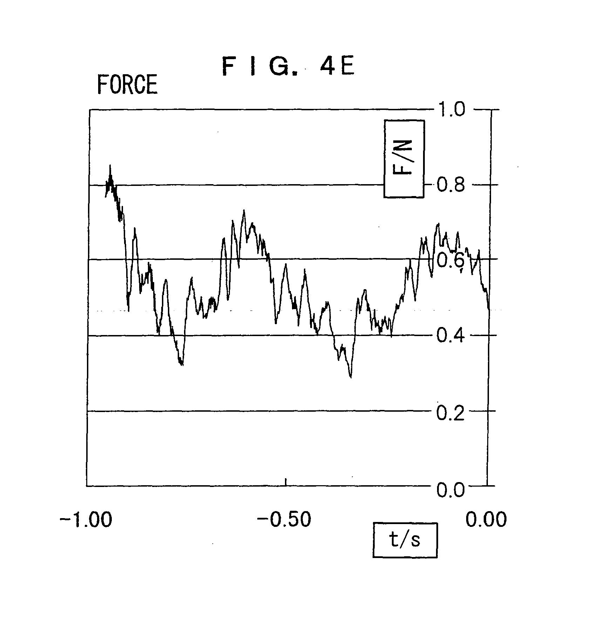

Next, Figs. 4A to 4E show a result obtained by transmitting in advance the sampling number and measuring the friction-related physical quantity by the friction testing apparatus by using the miniature car and the metal plate. In this measurement, the mass of the weight body is set to about 8.9 kg. Figs. 4A to 4E show a measurement result of the beat frequency fbeat, the displacement speed v of the weight body calculated from the beat frequency fbeat, the displacement x of the weight body calculated by integrating the displacement speed v, the acceleration $\alpha$ of the weight body calculated by differentiating the displacement speed v, and the inertia force F of the weight calculated by multiplying the mass M of the weight body by the acceleration $\alpha$. The inertia force shown in Fig. 4E has a magnitude equal to that of the friction force acting between two objects to be measured (the miniature car and the metal plate).

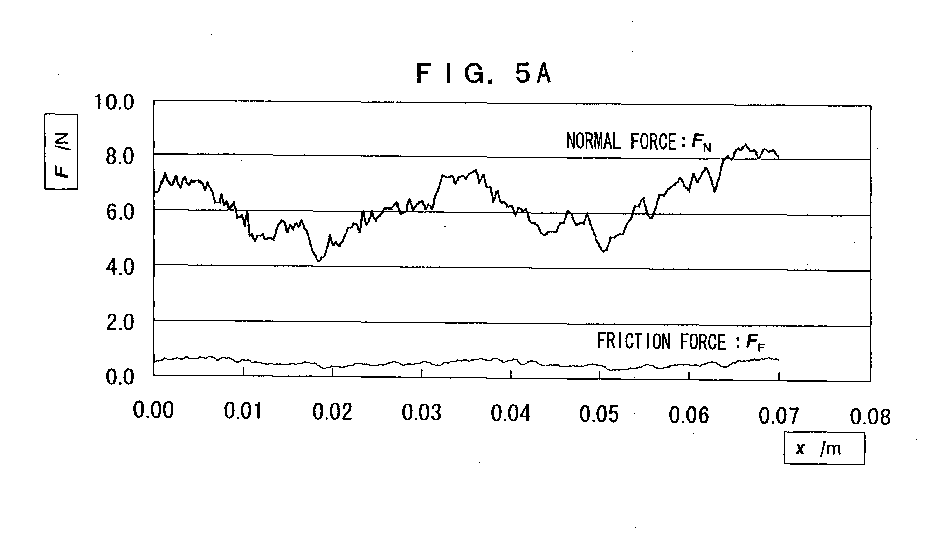

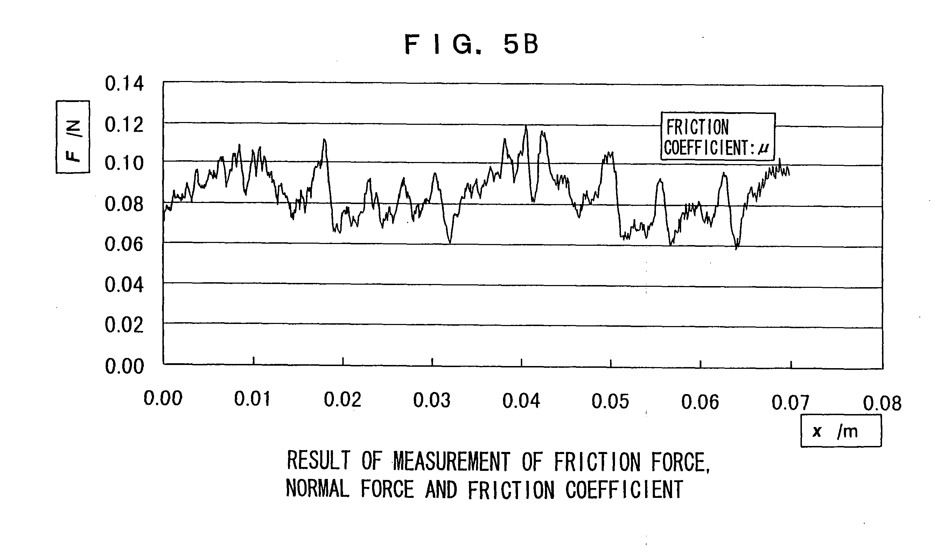

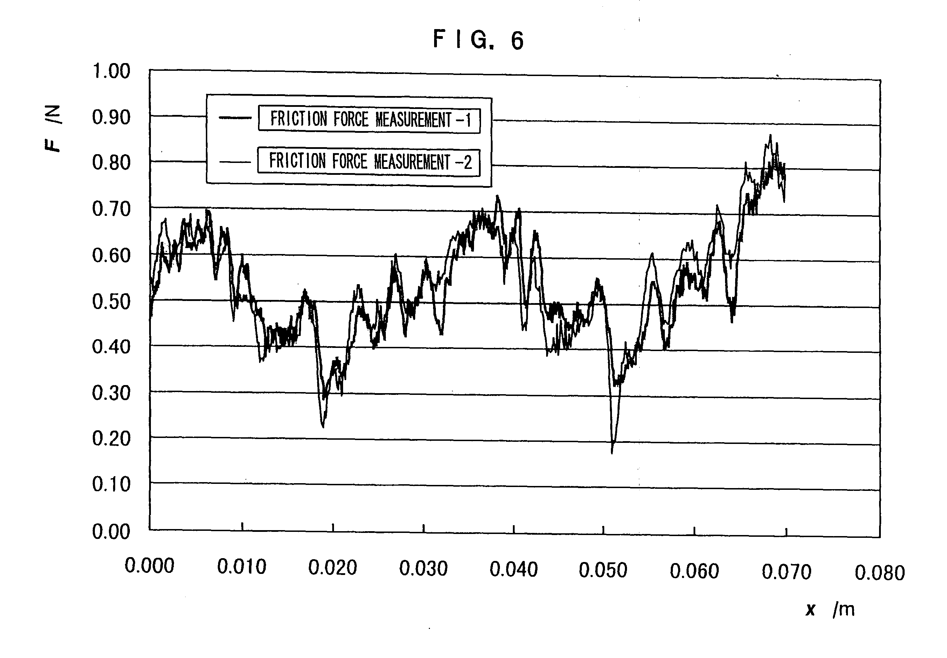

Further, Fig. 5A shows variations of the friction force FF measured as inertia force and the normal force FN measured by the force sensor with respect to displacement, and Fig. 5B shows variations of the friction coefficient $\mu$ with respect to displacement. Further, Fig. 6 shows superimposed variations of the friction force measured as the inertia force in two occasions of measuring experiments.

Next, a description will be given of a second embodiment of the invention. As shown in Fig. 7, the second embodiment is provided with a pair of measuring units 50 and 52 which are constituted by the direct acting bearing F structured by the direct acting static pressure air bearing, and the light wave interferometer. The pair of measuring units 50 and 52 are provided in such a manner as to be movable in a direction moving closer to each other and a direction moving away from each other.

Since the measuring unit 50 has the same structure as that of the measuring unit according to the first embodiment, only the direct acting bearing portion is illustrated, and an illustration of the remaining portions will be omitted. Further, the same reference numerals are assigned to the corresponding portions of the direct acting bearing portion of the measuring unit 50 to those of the first embodiment, and a description thereof will be omitted.

Since the measuring unit 52 has substantially the same structure as that of the measuring unit 50, a description will be given by attaching reference with subscript 1 to the corresponding portion. The measuring unit 52 is provided with a direct acting bearing constituted by a direct acting static pressure air bearing or the like having a linear upper guide portion 10B1 arranged so as to be parallel to the guide portion 10B, and a block-shaped upper movable portion 10C1 attached to the upper guide portion 10B1 so as to be movable along a length direction of the upper guide portion 10B1. A force sensor 54 is fixed to a lower surface of the upper movable portion 10C1 so as to be directed vertically downward.

In the present embodiment, a personal computer is provided, to which are connected digital multi meters each provided for each of a pair of light wave interferometers, a first frequency counter, and a second frequency counter.

In the case of measuring the friction-related physical quantity according to the present embodiment, a first object 60 to be measured is attached to an upper surface of the movable portion via a support plate 58, and a second object 56 to be measured is attached to a lower end portion of the force sensor 54. Further, the friction-related physical quantity is detected by the two light wave interferometers in the same manner as that of the first embodiment, by pressing the measuring units so as to come close to each other, and in such state, moving either an object of the movable portion, the force sensor and the first object to be measured, integrated with each other, or an object of the movable portion, the force sensor and the second object to be measured, integrated with each other (each of these objects corresponding to the weight body in the first embodiment).

When detecting the friction-related physical quantity between a paper and a ballpoint pen according to the present embodiment, a paper sheet is attached to the upper surface of the movable portion via a support plate, and the ballpoint pen is attached to a lower end of the force sensor 54, as shown in Fig. 7. Further, a load is applied to each of the measuring units so as to press together in such a manner that the paper sheet and the point of the ballpoint pen are pressed. In this state, the movable portion 10C or the movable portion 10C1 are moved by inertia after pushing the movable portion 10C or the movable portion 10C1 by hand.

Accordingly, it is possible to displace by inertia either the object of the movable portion provided with the corner cube prism, the support plate and the paper sheet, integrated with each other, or the object of the movable portion provided with the corner cube prism, the force sensor and the ballpoint pen, integrated with each other, along the guide portion in the length direction of the guide portion.

Accordingly, in the same manner as that of the first embodiment, it is possible to detect the friction-related physical quantity by two light wave interferometers.

In the present embodiment, since the friction-related physical quantity such as the displacement speed, the displacement, the acceleration, the friction force or the like, which acts between the two objects to be measured, is measured by using a pair of measuring units for measuring the friction, it is easier to measure the friction state in arbitrary relative motion.

Further, on condition that the external force such as an internal resistance of the direct acting bearing or the like can be disregarded, since the inertia forces applied to respective two weight bodies have an equal magnitude and opposite directions (law of action and reaction), it is possible to evaluate whether or not the assumption that the external force such as the internal resistance of the bearing or the like can be disregarded is appropriate, by measuring and comparing the inertia forces applied to the respective two weight bodies under various conditions. Further, the present embodiment is an effective method for investigating the existence of an unexpected external force (for example, an overlooked uncertainty factor) or the like.

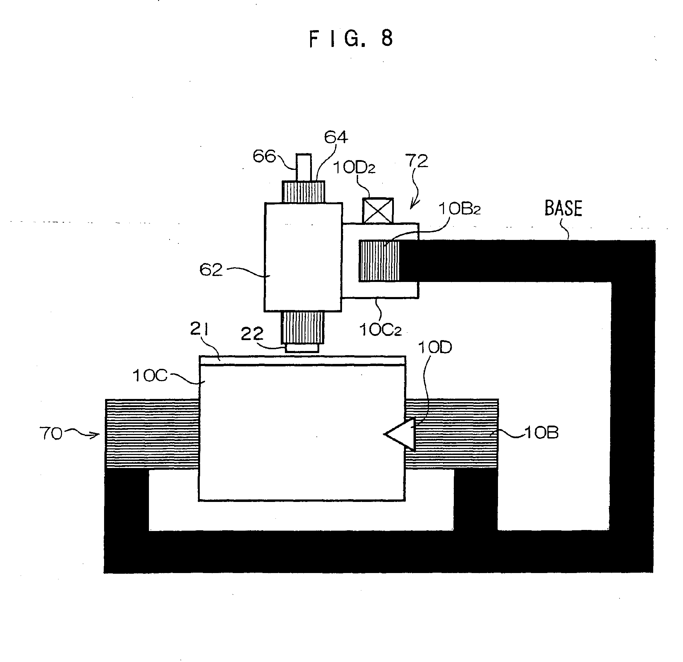

Next, a description will be given of a third embodiment of the invention with reference to Fig 8. As shown in the drawing, the third embodiment is provided with a pair of measuring units 70 and 72 constituted by the direct acting bearing and the light wave interferometer. Since the measuring unit 70 has the same structure as that of the measuring unit according to the first embodiment, only the direct acting bearing portion is illustrated, and an illustration of the other portions is omitted. Further, the same reference numerals are assigned to portions of the direct acting bearing portion of the measuring unit 70 which correspond to those of the first embodiment, and a description thereof will be omitted.

Since the measuring unit 70 has substantially the same structure as that of the measuring unit 50, the same reference numerals are attached to corresponding portions. The measuring unit 72 is provided with a direct acting bearing constituted by a direct acting static pressure air bearing or the like having a linear upper guide portion 10B2 fixed to the base in such a manner as to be directed to a horizontal direction at a predetermined interval with the guide portion 10B of the measuring unit 70 and be perpendicular to the guide portion 10B, and a block-shaped upper movable portion 10C2 attached to the upper guide portion 10B2 so as to be movable along the upper guide portion 10B2.

A corner cube prism 10D2 constituting the light wave interferometer is fixed to an upper surface of the upper movable portion 10C2. Further, a bearing 62, in which a through hole penetrating in a vertical direction passes, is fixed to a side surface of the upper movable portion 10C2. A vertical guide portion 64 is inserted to the bearing 62 in such a manner as to be movable in the vertical direction. A force sensor 66 detecting the normal force Fn corresponding to the pressing force applied in the vertical direction in the same manner as the force sensor 26 is fixed to an upper end of the vertical guide portion 64.

Next, a description will be given of a measuring method of a friction state according to the present embodiment. The first object 21 to be measured is attached to the upper surface of the movable portion 10C, and the second object 22 to be measured is attached to the lower end surface of the vertical guide portion 64. At this time, the first object to be measured and the second object to be measured are pressed by the weight of the vertical guide portion 64. In this configuration, it is also possible for the first member to be measured and the second member to be measured by applying a load via the force sensor 66.

In this state, the movable portion 10C or the upper movable portion 10C2, or both of the movable portion 10C and the upper movable portion 10C2 are moved by inertia after pushing the movable portion 10C or the upper movable portion 10C2, or both of the movable portion 10C and the upper movable portion 10C2. Accordingly, it is possible to displace by inertia either the object of the corner cube prism 10D, the movable portion 10C and the first object 21 to be measured, integrated with each other, or the object of the corner cube prism 10D2, the upper movable portion 10C2, the force sensor 66, the bearing 62 and the second object 22 to be measured (each of the objects corresponding to the weight body according to the first embodiment), integrated with each other, in the length direction of the guide portion along the guide portion.

Accordingly, in the same manner as the first embodiment, it is possible to detect the friction-related physical quantity by two light wave interferometers. In the present embodiment, it is possible to detect the friction-related physical quantity when relatively moving the first object to be measured and the second object to be measured in a two-dimensional manner, by moving both of the movable portion 10C and the upper movable portion 10C2. Further, it is possible to detect the friction-related physical quantity in state of motion corresponding to various locus paths, by making the moving speeds of the first object to be measured to the second object to be measured different, and making reciprocations.

In the present embodiment, if air is supplied to the direct acting bearing from the guide portion 10B2, the air is introduced to the movable portion 10C2. If part of the air is supplied to the guide portion 64, it is possible not to connect the air pipe to the movable guide portion 64.

Although in the foregoing, the example has been described in which that normal force Fn is detected using a force sensor, a structure may be used in which the normal force Fn is detected using a light wave interferometer instead of a force sensor. In this case, the normal force is measured as a total of an inertial force Ma of the object constituted by the guide portion 64 and the second object to be measured and a gravity force Mg acting on the object. Accordingly, it is possible to measure the normal force with high accuracy without using the force sensor. In the case of detecting the normal force by using the light wave interferometer, the light wave interferometer can be fixed to the movable portion 10C2. A light source of the light wave interferometer in this case preferably uses an LD rather than a He-Ne laser.

Further, it is preferable to dispose the light wave interferometer at an upper side of the guide portion 64 and move the light wave interferometer disposed at the upper side of the guide portion 64 in a manner that follows the movement of the movable portion 10C2 in the length direction of the guide portion 10B2, on the basis of the signal from the light wave interferometer measuring the movement of the movable portion 10C2.

In the present embodiment, since the structure is made such as to measure the friction-related physical quantity such as the displacement speed, the displacement, the acceleration, the friction force or the like which acts between two objects to be measured, by using two measuring units arranged in such a manner that the guide portion is orthogonal thereto, it is possible to more easily measure the friction state of arbitrary locus paths.

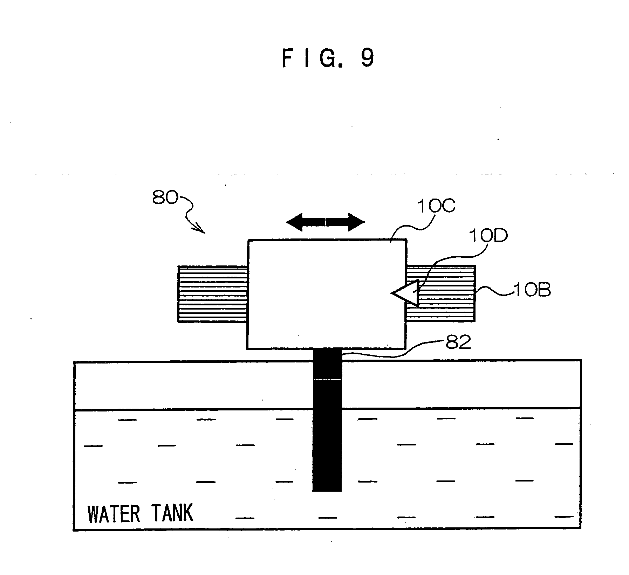

Next, a description will be given of a fourth embodiment of the invention with reference to Fig 9. As shown in the drawing, the fourth embodiment is provided with a measuring unit 80 constituted by the direct acting bearing and the light wave interferometer. Since the measuring unit 80 has the same structure as that of the measuring unit according to the first embodiment, only the direct acting bearing portion is illustrated, and an illustration of the other portions will be omitted. Further, the same reference numerals are attached to the portions of the direct acting bearing portion of the measuring unit 80 which correspond to those of the first embodiment, and a description thereof will be omitted.

In the present embodiment, a base end of a rod-shaped insertion portion 82 extending in the vertical direction is fixed to the bottom surface of the movable portion 10C.

In the present embodiment, in a state in which a leading end portion of the insertion portion 82 is inserted into a fluid such as water or the like held in a water tank, the movable portion 10C is first moved along the guide portion by hand. Accordingly, an object of the corner cube prism 10D, the movable portion 10C and the insertion portion 82, integrated with each other, is moved by inertia; a change in state of the reflected light from the corner cube prism 10D at a time when the object is moved is detected by the light wave interferometer; and the physical quantity related to fluid friction resistance acting on the insertion portion can be detected in the same manner as described in the first embodiment.

According to the present embodiment, it is possible in the field of fluid engineering to measure with high accuracy the fluid resistance of an object having a free surface in a fluid, typically a marine structure, a ship, or other fluid machine.

Further, in the present embodiment, when the guide portion is installed with an inclination with respect to the horizontal direction, the object to be measured is attached to the leading end of the insertion portion, and the movable portion is slid along the guide portion on the basis of its own weight so as to be protruded into the fluid, the structure of the present embodiment can be used in order to measure the friction resistance when an object to be measured protrudes which is difficult to install at a free angle due to gravity (for example, a free surface of a fluid body, a sand surface or the like).

Further, in the present embodiment, in the case where the insertion portion is detachably mounted to the movable portion so as to be capable of measure the friction resistance by being replaced by insertion portions having various shapes, it is possible to measure the friction resistance applied to insertion portions having various shapes.

For example, if a ship model is used as the insertion portion, it is possible to measure the friction resistance of a ship body with respect to the fluid.

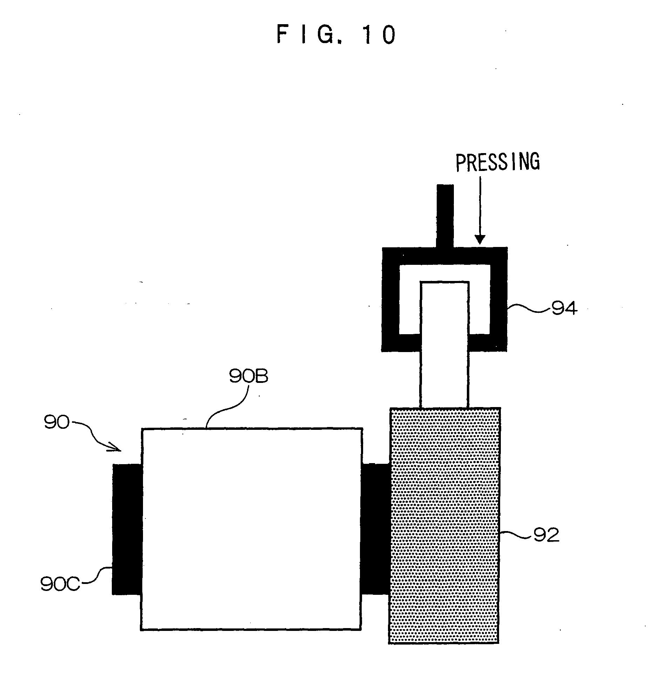

Next, a description will be given of a fifth embodiment of the invention with reference to Fig. 10.

In each of the embodiments mentioned above, the example has been described in which the direct acting bearing is used for the measuring unit. However, in the case of measuring a friction force, a road surface friction resistance $\mu$ or the like acting between a tire and a road surface, it is required to elongate the length of the upper surface of the movable portion and the length of the guide portion in order to carry out measurement with increased distance over which the tire rolls.

Accordingly, in the fifth embodiment the structure is made such that a rotary bearing such as a static pressure air rotary bearing (a radial thrust bearing) or the like is used in place of the static pressure air direct acting bearing, and a friction-related physical quantity is detected using an angular acceleration of a rotating weight body, instead of detecting the inertia force acting on the weight body moving in the horizontal direction.

As shown in Fig. 10, the present embodiment is provided with a static pressure air rotation bearing 90 constituted by a guide portion 90B in which a through hole is formed, and a rotary body 90C rotatably inserted in the through hole of the guide portion 90B.

A flywheel 92 is attached to an end of the rotary body 90C so as to be integrally rotatable with the rotary body 90C. In this case, it is preferable that the rotary body and the flywheel can be regarded as an integral rigid body. The rotary body and the flywheel may be manufactured by cutting from one block of metal. Discrimination between the rotary body and the flywheel is executed as a matter of convenience.

In other words, the "rotary body" indicates the rotation portion of the rotation bearing, the flywheel rotates integrally with the rotary body, and it is introduced for at least one of the purpose of increasing the moment of inertia of the body as a whole (the rotary body and the flywheel), and/or the purpose of providing a friction test surface at a convenient position.

A mounting member 94 for mounting the object to be measured to a peripheral surface of the flywheel 92 in a manner that allows the object to be pressed against the peripheral surface is provided above the flywheel 92. In the present embodiment, in the case of using a rotating object to be measured such as a tire or the like, the object to be measured is rotatably mounted to the mounting member 94.

Further, the present embodiment is provided with a detection apparatus for detecting an angular acceleration of the weight body constituted by the rotary body and the flywheel. The detection apparatus is constituted by a laser Doppler speed meter detecting an angular velocity of the weight body on the basis of the speed of the flywheel outer peripheral surface, and an angular acceleration detection apparatus detecting an angular acceleration $\alpha$ on the basis of the angular velocity. The angular acceleration $\alpha$ can be determined as $\alpha$ = a/r by multiplying the angular velocity a by the radius r of the flywheel.

Further, the structure may be made such as to detect th e rotation angle by attaching a non-contact type high-accuracy rotary encoder to the rotary body, in place of the laser Doppler speed meter. In this case, the angular acceleration may be determined by differentiating the angle twice.

A description will be given below of a case of measuring the friction force acting between the tire and the outer peripheral portion of the flywheel in the present embodiment. On condition that it is possible to disregard the friction torque or the like in an inner portion of the static pressure air rotation bearing, the following equation holds true.

$$T + I \cdot \alpha = 0 \qquad (2).$$

Here, T is a torque generated by a force in a rotating direction applied to the outer peripheral surface of the flywheel (a friction force applied to the portion between the object pressed against the outer peripheral surface of the flywheel and the outer peripheral surface of the flywheel); I is an inertia moment of the entire rotary body (a rotating weight body) including the flywheel and the rotary body; and $\alpha$ is an angular acceleration of the rotating weight body. Meanwhile, given that F is the friction force acting between the tire, which is the object to be measured, and the flywheel, and r is a distance between the outer peripheral surface of the flywheel and a center of rotation of the flywheel (that is, a radius of the flywheel), the expression T = rF holds.

Since the radius r of the flywheel and the inertia moment I are known values, it is possible to detect the friction force F acting between the tire, which is the object to be measured, and the flywheel, by detecting the angular acceleration.

. In the present embodiment, the rotating weight body is regarded as a rigid body. However, in the case where the rotating weight body cannot be regarded as a rigid body, it is desirable that correction be made according to FEM analysis or the like.

In the friction testing apparatus according to each of the embodiments, it is possible to introduce various full field measuring apparatuses in order to measure an acceleration distribution, a speed distribution and a displacement distribution of the inner portion of the object to be measured. Further, it is possible to combine the friction testing apparatus with a numerical analyzing method such as a finite element method or the like, thereby making it possible to execute a further high-level friction characteristic evaluation. Further, it is possible to execute a friction test with respect to a small force equal to or less than 1 N by using a weight body having a weight about 1 g. Therefore, it is possible to test dynamical characteristics of various materials used in a micro machine, a nano machine or the like.

In each of the foregoing embodiments, in order to prevent the influence of the vibration of the friction testing apparatus, it is desirable to employ a vibration proofing countermeasure such as using a heavy platen (for example, a cast-iron platen) fixed as a base to a floor, firmly structuring the friction testing apparatus as a whole, and supporting or suspending the light wave interferometer from the base via a buffer material, a vibration proofing material or the like.

Further, for example, in friction measurement in which a change of a shape is expected, such as a measurement of wiper friction, a measurement of friction resistance in the liquid including the free surface, or the like, it is advantageous to simultaneously photograph an image by a CCD camera or the like from the standpoint of multilateral comprehension of a phenomenon.

Description of Reference Numerals

| 10 | direct acting bearing |
| 10B | guide portion |
| 10C | movable portion |
| 10D | corner cube prism |
| 12 | light wave interferometer |
| 14 | base |
| 16 | reference position sensor |
| 26 | force sensor |
| 32 | light source |
| 34 | polarized light beam splitter |
| 50 | measuring unit |
| 52 | measuring unit |
| 54 | force sensor |

**Claims**

1. A friction testing apparatus comprising:

a movable portion, mounted to a guide portion so as to be movable along the guide portion and to which a first object to be measured is mountable;
a mounting member, for mounting a second object to be measured pressed by the first object to be measured attached to the movable portion;
a light wave interferometer, having a reflection member fixed to the movable portion and a light source inputting light to the reflection member, and detecting a change in state of light reflected from the reflection member when a body of the reflection member, the movable portion and the first object to be measured, integrated with each other, relatively moves with respect to the second object to be measured, in a state in which the first object to be measured attached to the movable portion and the second object to be measured attached to the mounting member are pressed against each other; and

a physical quantity detecting device for detecting a physical quantity related to friction acting between the first object to be measured and the second object to be measured, on the basis of the change in state of the reflected light detected by the light wave interferometer.

2. A friction testing apparatus comprising:

a first movable portion, mounted to a first guide portion so as to be movable along the first guide portion and to which a first object to be measured is mountable;

a second movable portion, mounted to a second guide portion arranged in parallel to the first guide portion so as to be movable along the second guide portion and to which a second object to be measured pressed by the first object to be measured is mountable;

a first light wave interferometer, having a first reflection member fixed to the first movable portion and a first light source inputting light to the first reflection member, and detecting a change in state of light reflected from the first reflection member when a body of the first reflection member, the first movable portion and the first object to be measured, integrated with each other, relatively moves with respect to the second object to be measured, in a state in which the first object to be measured mounted to the first movable portion and the second object to be measured mounted to the second mounting member are pressed against each other;

a second light wave interferometer having a second reflection member fixed to the second movable portion and a second light source inputting the light to the second reflection member, and detecting a change in state of light reflected from the second reflection member when a body of the second reflection member, the second movable portion and the second object to be measured, integrated with each other, relatively moves with respect to the first object to be measured, in a state in which the first object to be measured mounted to the first movable portion and the second object to be measured mounted to the second mounting member are pressed against each other; and

a physical quantity detecting device for detecting a physical quantity related to friction acting between the first object to be measured and the second object to be measured, on the basis of the change in state of the reflected light detected by at least one of the first light wave interferometer and/or the second light wave interferometer.

3. A friction testing apparatus as claimed in claim 2, wherein the second movable portion is provided with a third movable portion which is movable with respect to the second movable portion, and the second object to be measured is mounted to the second movable portion via the third movable portion.

4. A friction testing apparatus as claimed in any one of claims 1 to 3, wherein a pressing force detecting device for detecting a pressing force applied to the second object to be measured is further provided, and as the physical quantity related to friction the physical quantity detecting device detects a friction coefficient expressed as a ratio of the friction force acting between the first object to be measured and the second object to be measured to the pressing force detected by the pressing force detecting device,.

5. A friction testing apparatus as claimed in any one of claims 1 to 4, wherein as the physical quantity related to friction the physical quantity detecting device detects at least one of a friction force acting between the first object to be measured and the second object to be measured, a displacement of the object relative to a reference position, a speed of the object and/or an acceleration of the object.

6. A friction testing apparatus as claimed in claim 4 or 5, wherein the physical quantity detecting device detects a force of the object due to inertia as the friction force.

7. A friction testing apparatus comprising:

a movable portion, provided with an insertion portion inserted into a fluid and mounted to a guide portion so as to be movable along the guide portion;

a light wave interferometer, having a reflection member fixed to the movable portion and a light source inputting light to the reflection member, and detecting a change in state of light reflected from the reflection member when a body of the reflection member, the movable portion and the insertion portion, integrated with each other, relatively moves with respect to the fluid, in a state in which the insertion portion is inserted into the fluid; and

a detecting device, for detecting a physical quantity related to friction of the fluid acting on the insertion portion, on the basis of the change in state of the reflected light detected by the light wave interferometer.

8. A friction testing apparatus comprising:

a rotary body, rotatably provided in a guide portion;
a flywheel, mounted to the rotary body so as to be rotatable together with the rotary body;
a mounting member, for mounting an object to be measured pressed against an outer peripheral surface of the flywheel;
an angular acceleration detecting device for detecting an angular acceleration of a body constituted by the rotary body and the flywheel when rotating the flywheel together with the rotary body, in a state in which the object to be measured is pressed against the outer peripheral surface of the flywheel; and
a physical quantity detecting device for detecting a physical quantity related to friction acting between the object to be measured and the flywheel, on the basis of the angular acceleration detected by the detecting device.

9. A friction testing method comprising:

mounting a first object to be measured to a weight body provided so as to be movable along a guide portion;
pressing a second object to be measured against the first object to be measured mounted to the weight body;
moving a body of the first object to be measured and the weight body, integrated with each other, in a state in which the second object to be measured is pressed against the first object to be measured; and
detecting a force due to inertia of the object when moving the object, as a friction force acting between the first object to be measured and the second object to be measured.

10. A friction testing method comprising:

rotating a flywheel rotatably provided at a guide portion and pressing an object to be measured to an outer peripheral surface of the flywheel; and
detecting a friction force acting between the flywheel and the object to be measured, on the basis of a moment of inertia of an object constituted by the flywheel and a rotary body integrally rotating with the flywheel, and an angular acceleration of the flywheel.

11. A friction testing apparatus as claimed in claim 1, wherein the guide portion and the movable portion constitute a direct acting bearing.

12. A friction testing apparatus as claimed in claim 2, wherein the first guide portion and the first movable portion constitute a first direct acting bearing, and the second guide portion and the second movable portion constitute a second direct acting bearing.

13. A friction testing apparatus as claimed in claim 7, wherein the guide portion and the movable portion constitute a direct acting bearing.

FIG. 1

EP 1 754 966 A1

F I G. 2

10C

10B

# F I G. 3

```
                    ┌─────────────┐
                    │    START    │
                    └─────────────┘
                           │
                           ▼
100 ──        ◇ IS REFERENCE POSITION SIGNAL INPUT ? ◇ ── N
                           │ Y
                           ▼
102 ──        │   OUTPUT TRIGGER SIGNAL   │
                           │
                           ▼
104 ──        │ LOAD COUNTER AND MULTI METER OUTPUTS │
                           │
                           ▼
106 ──        │ COMPUTE SPEED V OF WEIGHT BODY │
                           │
                           ▼
108 ──        │ COMPUTE DISPLACEMENT x OF WEIGHT BODY │
                           │
                           ▼
110 ──        │ COMPUTE ACCELERATION α OF WEIGHT BODY │
                           │
                           ▼
112 ──        │ COMPUTE INERTIA FORCE F OF WEIGHT BODY │
                           │
                           ▼
114 ──        │ COMPUTE FRICTION COEFFICIENT μ │
                           │
                           ▼
116 ──        │   STORE TIME-SERIES DATA   │
                           │
                           ▼
118 ──        ◇ IS MEASUREMENT FINISHED ? ◇ ── N
                           │ Y
                           ▼
120 ──        ◇ IS DISPLAY INSTRUCTION OUTPUT ? ◇ ── N
                           │ Y
                           ▼
122 ──        │   DISPLAY TIME-SERIES DATA   │
                           │
                           ▼
                    ┌─────────────┐
                    │     END     │
                    └─────────────┘
```

16

# F I G. 4 A

FREQUENCY

# F I G. 4B

SPEED

t/s

v/ms⁻¹

# F I G. 4C

POSITION

# F I G. 4 D

ACCELERATION

# F I G. 4 E

FORCE

F/N

1.0

0.8

0.6

0.4

0.2

0.0

−1.00

−0.50

0.00

t/s

21

F I G. 5A

# FIG. 5B

RESULT OF MEASUREMENT OF FRICTION FORCE,
NORMAL FORCE AND FRICTION COEFFICIENT

EP 1 754 966 A1

FIG. 6

EP 1 754 966 A1

# FIG. 7

PRESSING

F I G. 8

FIG. 9

WATER TANK

# F I G. 1 0

PRESSING

90B

90

90C

94

92

<table>
<tr><td colspan="2" align="center">**INTERNATIONAL SEARCH REPORT**</td><td>International application No.<br>PCT/JP2005/008929</td></tr>
</table>

| | |
|---|---|
| A. CLASSIFICATION OF SUBJECT MATTER<br>Int.Cl$^7$ G01N19/02, G01L5/00 | |

According to International Patent Classification (IPC) or to both national classification and IPC

B. FIELDS SEARCHED

Minimum documentation searched (classification system followed by classification symbols)
Int.Cl$^7$ G01N19/02, G01L5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
JST7580(JOIS), JSTPlus(JOIS)

C. DOCUMENTS CONSIDERED TO BE RELEVANT

| Category* | Citation of document, with indication, where appropriate, of the relevant passages | Relevant to claim No. |
|---|---|---|
| Y | JP 2000-283873 A (Director General, Agency of Industrial Science and Technology), 13 October, 2000 (13.10.00), Par. Nos. [0012] to [0013], [0021]; Figs. 2, 3 (Family: none) | 1-5,7,8, 10-13 |
| Y | JP 10-62273 A (NSK Ltd.), 06 March, 1998 (06.03.98), Par. Nos. [0010] to [0014], [0035] to [0044]; Fig. 1 (Family: none) | 1-5,7,8, 10-13 |
| X | JP 5-14876 U (Japan Electronic Control Systems Co., Ltd.), 26 February, 1993 (26.02.93), Full text; all drawings (Family: none) | 8,10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>23 August, 2005 (23.08.05) | Date of mailing of the international search report<br>06 September, 2005 (06.09.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2005/008929 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2725682 B2  (Tokimec Inc.),<br>05 December, 1997 (05.12.97),<br>Full text; all drawings<br>(Family: none) | 8,10 |
| A | Yusaku FUJII, "Seiatsu Kuki Chokudo Jikuuke<br>no Masatsu Tokusei Hyoka", Japanese Society<br>of Tribologists, Tribology Kaigi Yokoshu,<br>2001-5, 20 April, 2001 (20.04.01), pages 285<br>to 286 | 1-13 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000283873 A
- JP 2001174400 A
- JP 10062273 A

**Non-patent literature cited in the description**

- **Y. FUJII ; K. OGUSHI ; T. TOJO.** A proposal for a dynamic-response-evaluation method for torque transducers. *Meas. Sci. Technol,* 1999, vol. 10 (12), N142-N144